# FASCICULE DE BREVET EUROPEEN

(11) **EP 3 818 019 B1**
(45) Date de publication et mention de la délivrance du brevet: **10.08.2022**
(21) Numéro de dépôt: 19748579.0
(22) Date de dépôt: 27.06.2019
(51) Int. Cl.: C03B 3/02, C03B 1/02

(54) **PREPARATION DE MATIERES PREMIERES POUR FOUR VERRIER**
HERSTELLUNG VON AUSGANGSSTOFFEN FÜR GLASSCHMELZOFEN
PREPARATION OF RAW MATERIALS FOR GLASS FURNACE

(30) Priorité: 03.07.2018 FR 1856124
(43) Date de publication de la demande: 12.05.2021
(73) Titulaire: Saint-Gobain Glass France, 92400 Courbevoie (FR)
(72) Inventeur: BARET, Bertrand, 95360 MONTMAGNY (FR); MARTIN, Alexandre, 95680 MONTLIGNON (FR); WOELFFEL, William, 75020 PARIS (FR); PAPIN, Sophie, 60700 FLEURINES (FR)
(74) Mandataire: Saint-Gobain Recherche
(86) Numéro de dépôt international: PCT/FR2019/051591
(87) Numéro de publication internationale: WO 2020/008128

(56) Documents cités:
- JP-A- S60 221 327
- US-A- 3 753 743

## Description

L'invention concerne un dispositif et un procédé pour préparer et enfourner des matières premières dans un four verrier.

Le volume de laboratoire des fours verriers à flamme est balayé par de forts courants gazeux susceptibles d'entraîner avec eux une partie de la matière première pulvérulente introduite dans le four. Certaines poudres telles que sable, calcaire, dolomie, ont tendance à être particulièrement volatiles. Notamment, la dolomie se fragmente sous l'effet de la température (phénomène dit de décrépitation), occasionnant plus d'envols. Ces envols de matière première produisent les inconvénients suivant :
- la matière envolée se dépose dans les conduits d'acheminement des fumées comme dans les chambres de brûleur, les régénérateurs ou récupérateurs, produisant un encrassement voire une obstruction de ces conduits et nécessitant leur démontage puis nettoyage, et pouvant même causer une limitation de la durée de vie du four,
- la composition recherchée peut, selon le cas, être modifiée si ces envols impactent plus certaines matières que d'autres,
- ils représentent une perte de matière première.

L'humidification de la matière première pulvérulente est un moyen de réduire les envols pendant le transport par convoyage avant le four puis dans le four. Cependant, cette humidification représente une perte d'énergie de chauffage du four. L'humidification suivie du séchage de la matière première avant enfournement est également une solution pour réaliser des agglomérats moins sujets aux envols, notamment en ajoutant des liants et/ou en utilisant des matières spécifiques favorisant la formation de ces agglomérats. Cependant, si l'on ne forme pas intentionnellement des briquettes par un système de conformage et si l'on utilise la manière classique de mise en œuvre du mélange de poudres, le séchage d'une composition déjà humidifiée peut conduire à former de gros blocs de matière première s'écoulant très mal voire conduisant au blocage des préchauffeurs de matières premières (« batch preheater » en anglais), notamment ceux dans lesquels la matière s'écoule au moins partiellement à la verticale. Ceci peut conduire à l'arrêt de la progression de la matière première en vue de son enfournement et nécessiter une intervention manuelle d'opérateurs pour faire redémarrer l'installation.

Le US5100840 enseigne la formation de briquettes de matière première à enfourner. Comme autres documents de l'état de la technique, on peut citer les DE102012224139, DE19836869, US4248616.

US3753743 A fait référence à un procédé de préparation d'une masse à vitrifier, comprenant la réalisation d'un mélange de poudre de matière première et d'une solution de NaOH (comprenant de l'eau) produisant une masse humidifiée de poudre de matière première, puis le mélange de calcin chaud avec la masse humidifiée, puis le chauffage et le séchage. La masse est utilisée pour la production de verre plat grâce à un four. De même, US3753743 A se rapporte aussi à un dispositif permettant d'exécuter ledit procédé.

On a maintenant trouvé que les envols peuvent être limités et la cinétique de fusion accélérée si l'on maintient un certain état de structuration du mélange vitrifiable. Cet état est provoqué par l'ajout d'eau et se maintient après séchage si le mélange n'est pas agité trop brutalement suite à ce séchage. Il peut être obtenu par une modification aisée d'une installation de préparation de mélange vitrifiable.

Cet état de structuration selon lequel le mélange vitrifiable comprend des agglomérats doit être contrôlé pour ne pas provoquer de blocage à l'issue du séchage, et la présence de calcin est apparue bénéfique sur ce point. Il semble que l'incorporation de calcin favorise la fragmentation des agglomérats les plus gros de matière première ou évite la formation d'agrégats trop gros, ce qui est favorable à sa progression lors de son convoyage, notamment dans les préchauffeurs dans lesquels la matière circule au moins partiellement verticalement, voire constamment verticalement. Des préchauffeurs dans lesquels la matière s'écoule verticalement, bien adaptés à la présente invention, sont décrits dans DE102012204439, EP2138465, EP2248773. Le fait que la surface des morceaux de calcin soit lisse pourrait favoriser cette fragmentation en raison de la faible adhérence de la matière première sur eux. La taille des morceaux de calcin serait également importante pour cisailler la matière en mouvement. La masse à enfourner de matières vitrifiables ainsi préparée reste moins sujette aux envols car les agrégats les plus petits ne sont pas fragmentés. D'autre part, l'existence d'agrégats permet également d'accélérer la vitesse de fusion du mélange pour former le verre.

L'invention concerne un dispositif de préparation et d'enfournement de matières premières pour un four verrier comprenant
∘ un moyen de réalisation d'un mélange de poudre de matière première et d'eau liquide produisant une masse humidifiée de poudre de matière première, ledit moyen comprenant une cuve munie d'un moyen d'agitation, d'une entrée pour la poudre de matière première, d'une alimentation en eau liquide et/ou de vapeur d'eau, d'une sortie pour la masse humidifiée de poudre de matière première,
∘ un système de réalisation d'un mélange de calcin avec la masse humidifiée de poudre de matière première sortie de la cuve pour produire un mélange de matière première et de calcin, dit mélange MP/C,
∘ un préchauffeur de matière première dans lequel le mélange MP/C circule et est chauffé et séché pour produire une masse à enfourner, puis
∘ un système d'enfournement dans le four verrier de la masse à enfourner.

L'invention permet de s'affranchir de l'utilisation d'un système de conformage (c'est-à-dire de mise en forme) de la matière première utilisant des moules menant à des agglomérats calibrées (briquettes, boulets, granulés, pellets, etc), comme des compacteuses à frettes. L'invention ne nécessite pas non plus l'usage d'une technique de granulation de la matière première selon laquelle la matière est mise en rotation (notamment dans une cuve du type tambour en rotation) généralement en présence d'un liant de façon à mener à des granulés (pellets en anglais). Le mélange MP/C rentrant dans le préchauffeur n'est donc pas conformé et le préchauffeur ne délivre pas non plus de masse conformée. Le préchauffeur délivre une masse à enfourner comprenant des agglomérats de forme aléatoire.

Dans le préchauffeur, le mélange MP/C s'écoule au moins partiellement verticalement, c'est-à-dire par un mouvement comprenant une composante verticale, voire même exclusivement verticalement. Cet écoulement se produit sous l'effet de la pesanteur. La masse à enfourner sort du préchauffeur à une cote inférieure à celle à laquelle le mélange MP/C est entré dans le préchauffeur. La sortie du préchauffeur se trouve même généralement à la verticale en dessous de son entrée. Le mélange MP/C est chauffé et séché dans le préchauffeur. Le dispositif selon l'invention peut comprendre une canalisation amenant des fumées de combustion générées par le four verrier jusqu'au préchauffeur de façon à fournir à celui-ci de l'énergie thermique de chauffage et de séchage du mélange MP/C. Les fumées circulent dans le préchauffeur par au moins une canalisation. Les fumées peuvent venir au contact direct du mélange MP/C. Afin de réduire les risques d'envol, les fumées de combustion peuvent ne venir que partiellement ou pas du tout au contact du mélange MP/C dans le préchauffeur. Le mélange MP/C et les fumées de combustion peuvent circuler dans des canalisations séparées dans le préchauffeur, généralement à contre-courant. Ces canalisations peuvent être séparées tout en pouvant comprendre des orifices de communication permettant à des gaz de s'échapper du mélange MP/C pour se mélanger aux fumées de combustion. En effet, une canalisation dans laquelle circule le mélange MP/C peut comprendre des orifices communiquant avec une canalisation dans laquelle circulent les fumées de combustion pour faciliter l'évacuation des gaz s'échappant du mélange MP/C vers une canalisation dans laquelle circulent les fumées de combustion. En effet, le mélange MP/C largue de la vapeur d'eau au cours de sa progression dans le préchauffeur. Ces gaz largués par le mélange MP/C vont alors, au moins pour partie, rejoindre les gaz de combustion. Le préchauffeur délivre une masse à enfourner de matières vitrifiables. A la suite du préchauffeur, cette masse à enfourner est acheminée jusqu'au four, par un système pouvant par exemple comprendre un tapis défilant puis elle est introduite dans le four par une enfourneuse à vis ou tout autre appareil bien connu de l'homme du métier. Le préchauffeur peut par exemple être du type de l'un de ceux décrit dans US5526580, CN201458942 ou DE3716687.

L'invention concerne également un four verrier équipé du dispositif selon l'invention. L'invention concerne également un procédé de fusion de verre dans un four, notamment un four muni du dispositif de préparation et d'enfournement de matière première selon l'invention, comprenant
∘ la réalisation dans une cuve d'un mélange de poudre de matière première et d'eau liquide produisant une masse humidifiée de poudre de matière première, ladite cuve étant munie d'un moyen d'agitation, d'une entrée pour la poudre de matière première, d'une alimentation en eau liquide et/ou de vapeur d'eau, d'une sortie pour la masse humidifiée de poudre de matière première, puis
∘ le mélange de calcin avec la masse humidifiée de poudre de matière première sortie de la cuve, pour produire un mélange de matière première et de calcin, dit mélange MP/C, puis
∘ le chauffage et séchage dudit mélange MP/C dans un préchauffeur produisant une masse à enfourner, puis
∘ l'enfournement dans le four de ladite masse à enfourner.

Dans le cadre de la présente invention, on distingue l'eau complexée dans un composé comme un hydrate, de l'eau non complexé et qui est dite « libre ». On utilise l'expression « eau liquide » pour désigner de l'eau libre condensée, ce qui inclut l'eau adsorbée en surface de grains. De la vapeur d'eau est de l'eau libre gazeuse, donc non-condensée. On peut également parler de la masse d'eau totale contenue dans la masse humidifiée de poudre de matière première ou dans le mélange MP/C ou dans la masse à enfourner et il s'agit alors de la somme de la masse d'eau libre (c'est-à-dire liquide) et d'eau complexé contenue dans ces compositions.

Selon l'invention, on réalise un mélange d'eau liquide et de poudre de matière première. Cette poudre de matière première peut apporter par elle-même de l'eau, soit sous forme d'eau liquide (notamment par le sable), soit sous forme d'un hydrate d'un composé dans lequel l'eau est complexée (exemple : un hydrate de carbonate de sodium). Généralement, si la poudre de matière première apporte de l'eau, plus de 95% de la masse de cette eau est de l'eau liquide (c'est-à-dire libre). Généralement, la poudre de matière première ne contient pas d'hydrate au départ. Si la poudre de matière première apporte de l'eau liquide, on en tient compte pour quantifier la quantité d'eau liquide qu'on lui ajoute pour la réalisation du mélange de poudre de matière première et d'eau liquide. On ajoute de l'eau liquide à la poudre de matière première de sorte que la somme de la masse de l'eau liquide apportée au départ par la poudre de matière première et de l'eau liquide ajoutée à la poudre de matière première représente au moins 0,5% et généralement au moins 1% de la masse humidifiée de poudre de matière première, et au plus 10% et généralement au plus 3,5% de la masse humidifiée de poudre de matière première.

Le mélange d'eau liquide et de poudre de matière première est réalisé dans une cuve et sous agitation. Dans la cuve, au cours du malaxage, la teneur en eau liquide (donc également en eau libre) peut diminuer si un hydrate se forme, de l'eau passant alors de l'état libre à l'état complexée. On n'ajoute généralement pas de calcin lors de la réalisation de ce mélange. Ce mélange ne comprend donc généralement pas de calcin (où alors moins de 5% en masse de calcin en base sèche) lorsqu'il quitte la cuve. La présence de calcin dans une cuve munie d'une agitation aurait des conséquences néfastes sur l'usure de la cuve et nécessiterait plus d'énergie pour réaliser l'agitation.

Le mélange de poudre de matière première et d'eau liquide est réalisé dans une cuve équipée d'un moyen d'agitation. Il peut par exemple s'agir d'un malaxeur THZ commercialisé par la société TEKA. Dans cette cuve, on peut introduire directement de l'eau liquide, et le cas échéant également de l'eau sous forme de vapeur (qui est également de l'eau libre mais gazeuse), laquelle se condense rapidement dans la cuve en eau liquide dans l'espace libre entre l'injection de vapeur et la surface des matières premières, ainsi que sur les grains de matière première. Introduire de la vapeur d'eau dans une cuve est donc aussi un moyen d'apporter de l'eau liquide pour réaliser le mélange de poudre de matière première et d'eau liquide. Par ailleurs, la vapeur ayant une température généralement d'au moins 100 °C, elle contribue aussi à chauffer la poudre de matière première.

De préférence, avant la réalisation du mélange de poudre de matière première et d'eau liquide, la poudre de matière première comprend un composé apte à se dissoudre au moins partiellement dans l'eau liquide de la masse humidifiée de poudre de matière première puis à précipiter sous forme d'hydrate (comprenant plus d'eau complexée qu'avant sa dissolution), comportement dit de « dissolution/précipitation ». Ce composé consomme de l'eau libre pour la rendre complexée. A titre d'exemple, le carbonate de sodium non hydraté a un tel comportement. Le carbonate de sodium non hydraté (qui ne contient donc aucune eau complexée) se solubilise au moins partiellement dans l'eau liquide puis précipite sous forme de monohydrate de carbonate de sodium (qui contient donc une mole d'eau complexée par mole de carbonate de sodium). Ce monohydrate est plus stable au-dessus de 36°C. Ce phénomène de « dissolution/précipitation » favorise la formation de ponts entres les grains de poudre de matière première, ce qui contribue à lui donner de la cohérence et une tendance à la formation d'agglomérats. Ce composé présentant ce comportement de « dissolution/précipitation » peut notamment être le carbonate de sodium ou le carbonate de potassium ou le sulfate de sodium ou le sulfate de calcium. Ce composé est dans sa forme déshydratée au départ avant mélange avec de l'eau liquide. Ainsi, la masse humidifiée de matière première est de préférence chauffée à une température (généralement au moins 36°C) à laquelle un hydrate du composé ayant un comportement de « dissolution/précipitation » est stable. Si la poudre de matière première contient un tel composé, notamment du carbonate de sodium, avantageusement, on chauffe le mélange de poudre de matière première et d'eau liquide jusqu'à au moins 36°C au cours de cette opération de réalisation du mélange d'eau liquide et de poudre de matière première de façon à stabiliser l'hydrate de ce composé, notamment le carbonate de sodium monohydraté. La masse humidifiée de matière première contient alors cet hydrate.

On mélange ensuite le calcin et la masse humidifiée de matière première pour produire le mélange MP/C. Le calcin entre donc en contact avec la poudre de matière première après que celle-ci ait déjà été humidifiée avec l'eau liquide. Le mélange MP/C est réalisé par un système distinct et en aval de la cuve utilisé pour réaliser la masse humidifiée de poudre de matière première. Ce système de réalisation d'un mélange de calcin avec la masse humidifiée de poudre de matière première (mélange MP/C) peut comprendre un tapis défilant sur lequel la masse humidifiée de poudre de matière première et le calcin sont déposés séparément, c'est-à-dire l'un après l'autre sur le tapis. On peut ajouter le calcin à la masse humidifiée de poudre de matière première. Pour réaliser cette opération, la masse humidifiée de poudre de matière première peut par exemple défiler sur un tapis et, en un point fixe au-dessus du tapis, du calcin est déversé sur elle. De manière analogue, pour produire le mélange MP/C, on peut ajouter la masse humidifiée de poudre de matière première au calcin. Dans ce cas, on peut faire défiler le calcin sur un tapis sur lequel la masse humidifiée de poudre de matière première est ensuite déversée.

Dans le procédé selon l'invention, on produit donc d'abord une masse humidifiée de poudre de matière première par un moyen de réalisation de ce mélange comprenant une cuve munie d'un moyen d'agitation, puis cette masse humidifiée sort de la cuve par sa sortie et est acheminée par un moyen d'acheminement à un système (distinct du moyen de réalisation du mélange précédent), pour la réalisation du mélange MP/C, puis le mélange MP/C est acheminé au préchauffeur et introduit dans celui-ci pour y être chauffé et séché et être transformée en une masse à enfourner.

Le mélange MP/C comprend de la poudre de matière première, du calcin et de l'eau liquide et/ou complexée. La poudre de matière première peut comprendre de l'eau complexée (non-libre) dans un hydrate. Le rapport de la masse d'eau liquide et de la masse d'eau complexée dans le mélange MP/C peut varier entre le début de la réalisation de la masse humidifiée de poudre de matière première et l'introduction du mélange MP/C dans le préchauffeur en raison du phénomène de dissolution/précipitation déjà évoqué et pouvant faire baisser la masse d'eau liquide au profit de la masse d'eau complexée.

Après réalisation du mélange MP/C et notamment au moment de son introduction dans le préchauffeur, le mélange MP/C comprend généralement au moins 0,2%, notamment au moins 0,4% en masse d'eau totale (somme de l'eau complexée et de l'eau liquide c'est-à-dire libre), et au plus 9%, notamment au plus 3,4% en masse d'eau totale.

Après réalisation du mélange MP/C et notamment au moment de son introduction dans le préchauffeur, le mélange MP/C comprend généralement au moins 0%, généralement au moins 0,1% et plus généralement au moins 0,2% en masse d'eau liquide, et au plus 9%, généralement au plus 6% en masse d'eau liquide. L'objectif est d'avoir le moins d'eau possible dans le mélange MP/C pour des raisons énergétiques, mais il en faut suffisamment pour structurer la masse à enfourner afin d'accélérer la fusion et limiter les envols. Ces proportions d'eau représentent donc un compromis.

Le mélange MP/C comprend généralement au moins 1% et généralement au moins 5% et plus généralement au moins 10% en masse de calcin. Le mélange MP/C comprend généralement au plus 60% en masse de calcin.

Le calcin peut être humide lors de son mélange avec la masse humidifiée de matière première mais la proportion qui vient d'être donnée l'est bien entendu sur la base de calcin sec. Il n'y a pas d'intérêt particulier à ce que le calcin soit humide lors de la réalisation du mélange MP/C et il est même préféré qu'il soit sec. Le cas échéant, on peut sécher le calcin avant de le mélanger à la masse humidifiée de poudre de matière première.

Le mélange MP/C ainsi réalisé est ensuite déversé dans le préchauffeur. Pour le cas où la poudre de matière première contient un composé présentant un comportement de « dissolution/précipitation » évoqué plus haut comme le carbonate de sodium, avantageusement, le calcin ne fait pas descendre la température de la masse humidifiée de poudre de matière première au sein du mélange MP/C en dessous de 36°C. Si nécessaire, avant d'être mélangée au calcin, la masse humidifiée de poudre de matière première est chauffée suffisamment au-dessus de 36°C pour que le mélange au calcin ne fasse pas descendre sa température en-dessous de 36°C. Ainsi, la masse humidifiée de poudre de matière première au sein du mélange MP/C voire même le mélange MP/C entier entre dans le préchauffeur généralement en ayant une température comprise entre 36 et 90°C.

Le dispositif selon l'invention est généralement configuré pour que le mélange MP/C circule en continu dans le préchauffeur et pour que la masse à enfourner soit enfournée en continu dans le four.

Le mélange de poudre de matière première et d'eau liquide produisant une masse humidifiée de poudre de matière première peut être réalisé dans une cuve munie d'un moyen d'agitation, d'une entrée pour la poudre de matière première, d'une alimentation en eau liquide et/ou de vapeur d'eau, d'une sortie pour la masse humidifiée de poudre de matière première. Une telle cuve peut également être appelée « malaxeur ».

Le dispositif selon l'invention peut être configuré pour que pour que le moyen de réalisation d'un mélange de poudre de matière première et d'eau liquide fonctionne en discontinu (on dit également « en batch »). La réalisation d'un mélange de poudre de matière première et d'eau liquide produisant la masse humidifiée de poudre de matière première est alors discontinue. Dans ce cas, l'ajout d'eau liquide peut être réalisé avec une masse constante de poudre de matière première dans la cuve. Le préchauffeur fonctionnant généralement en continu, le mélange MP/C progresse continuellement dans le préchauffeur (généralement à la verticale). En fonction de l'espace libre à l'entrée du préchauffeur, périodiquement et en discontinu, du mélange MP/C est réalisé et introduit dans le préchauffeur. Ainsi, en fonction de l'espace libre en entrée du préchauffeur, un système de régulation détecte la nécessité d'introduire du mélange MP/C dans le préchauffeur et commande l'ouverture de la sortie de la cuve et de la réalisation de mélange MP/C et l'introduction de mélange MP/C dans le préchauffeur. Le système de régulation est apte à détecter de l'espace libre dans le préchauffeur et, en fonction de l'espace libre détecté, de commander la réalisation d'un mélange de poudre de matière première, la réalisation de mélange MP/C et l'introduction de mélange MP/C dans le préchauffeur.

La poudre de matière première comprend les ingrédients devant participer à la fusion de verre, comme de la silice, au moins un fondant de la silice comme un carbonate de sodium, éventuellement au moins un agent d'affinage, éventuellement au moins un agent stabilisant comme une source d'alumine (comme : feldspath, néphéline, phonolite, alumine calcinée, hydroxyde d'aluminium) ou une source de calcium comme le calcaire, éventuellement au moins un agent colorant, et tout composé souhaité pour réaliser le verre final. La silice est généralement le composé présent en plus grande quantité dans la poudre de matière première.

Ainsi, en dehors de toute eau liquide, la matière première en poudre peut comprendre :
- 30 à 99% en poids de SiO₂ ,
- 1 à 20% en poids de Na₂CO₃,
- 0 à 20% en poids de CaCO₃,
- 0 à 20% en poids de (CaCO₃,MgCO₃)
- 0 à 5% en poids de source d'alumine,
- 0 à 1% en poids de NaSO₄,
- 0 à 1% en poids de CaSO₄.

Généralement, la granulométrie de la poudre de la matière première est telle que son D50 est compris entre 50 et 500 µm.

Avantageusement, au moins 90% de la masse de calcin est constitué de particules de taille comprise entre 1 mm et 10 cm, et généralement comprise entre entre 2 mm et 10 cm, et plus généralement de taille comprise entre 1 cm et 10 cm. Une taille d'une particule de calcin est la distance entre ses deux points les plus éloignés.

Le séchage du mélange MP/C, notamment par les fumées de combustion provenant du four, produit une réduction de la teneur en eau totale de ce mélange, c'est-à-dire la somme de l'eau libre et de l'eau complexée, et une montée de sa température. De préférence, la masse à enfourner comprend moins de 0,1% en masse d'eau totale (somme de la masse d'eau liquide et d'eau sous forme complexée).

Avantageusement, le mélange MP/C est chauffé à une température comprise entre 100 et 500°C et de préférence entre 200 et 500°C, et de préférence entre 250 et 400°C dans le préchauffeur. La masse à enfourner sortant du préchauffeur est donc dans ce domaine de température. Elle est introduite dans le four en étant aussi dans ce domaine de température. Le transfert du mélange MP/C du préchauffeur au four peut être réalisé à l'aide de tapis de convoyage, vis sans fin, etc. Cette zone de transfert est de préférence isolée thermiquement afin que la chaleur du mélange MP/C soit conservée entre le préchauffeur et le four.

Tous les fours verrier sont concernés par la présente invention et notamment les fours à brûleurs transversaux et les fours à boucle.

### EXEMPLES

### Influence de la teneur en eau

Des mesures de la cohésion de poudre humidifiée de matière première en fonction de la teneur en eau montre que la cohésion augmente avec la teneur de celle-ci. On a réalisé des pastilles calibrées de mélanges humidifiés de matières premières contenant le mélange de poudres suivant (% donnés en base sèche), dont aucun de ces composants n'était un hydrate:
- 60,3% en masse de sable
- 4,5% en masse de calcaire
- 18,3% en masse de carbonate de sodium
- 1,1% en masse de feldspath
- 14,9% en masse de dolomie
- 0,9% en masse de sulfate de sodium
, auquel de l'eau liquide a été ajouté en différentes proportion (2%, 4%, 6% d'eau de la somme de la masse d'eau liquide et de poudre). Ces pastilles ont ensuite été séchées à 150°C pendant une nuit à l'air. On les a enfin écrasées avec un appareil de mesure de compression uniaxiale. La force maximale au moment de la casse, c'est-à-dire juste avant écrasement, a été mesurée. Les pastilles avec 6% en masse d'eau initialement introduite sont plus solides que celles avec 4% d'eau qui sont elle-même plus solides que celles avec 2% en masse d'eau. L'observation des agrégats au microscope électronique à balayage montre que ceux-ci augmentent de taille avec la teneur en eau de la poudre humidifiée de matière première. Quand la teneur en eau augmente, les grains sont mieux connectés entre eux par des ponts, les agrégats formés sont plus gros et plus compacts. Généralement, on n'observe pas d'agrégats de taille supérieure à 2 cm. Une taille d'agrégat est la distance entre ses deux points les plus éloignés.

### Influence de la granulométrie du calcin

On prépare un mélange de poudre de matière première et d'eau liquide dans un bocal pour produire une masse humidifiée de poudre de matière première à raison de 3,6% d'eau ajoutée par rapport à la masse humidifiée de matière première (mélange de sable, carbonate de Na, calcaire, feldspath, sulfate de Na, coke). Pour ce faire le mélange de poudres sèches est préalablement réalisé et chauffé dans une étuve à 60°C, puis l'eau est ajoutée, puis le mélange est agité dans un mélangeur dynamique 3D pendant 5 minutes. Ce mélange a finalement une température d'au moins 36°C. On arrête l'agitation, puis ajoute du calcin et l'on agite à la main le bocal pendant 1 minute. La quantité de calcin était de 40% en masse de celle du mélange MP/C. Le contenu du bocal est ensuite transféré dans un moule de forme cylindrique dans le lequel il est légèrement tassé manuellement de sorte à ce que sa surface devienne plane. Le moule est placé dans une étuve à 120°C pendant 20 heures. Le bloc formé est démoulé puis sa résistance à la compression uniaxiale est évaluée. Le bloc et son test en compression simule la résistance d'un agrégat formé dans le procédé selon l'invention. Le tableau ci-dessous rassemble les résultats donnant les forces maximales atteintes avant rupture du bloc en fonction de la granulométrie du calcin.

| Exemple | Taille calcin | Force maximale moyenne (N) |
|---|---|---|
| 1 | < 1 mm | 420 |
| 2 | 4-8 mm | 100 |
| 3 | 8-16 mm | 95 |

La colonne « taille calcin » donne le domaine de taille des particules de calcin pour 100% de sa masse. On voit que les blocs des exemples 2 et 3 se fracturent sous une force plus faible que pour l'exemple 1, ce qui est favorable au déblocage des matières s'écoulant dans le préchauffeur, puisque les gros blocs se formant éventuellement dans celui-ci se briseront plus facilement.

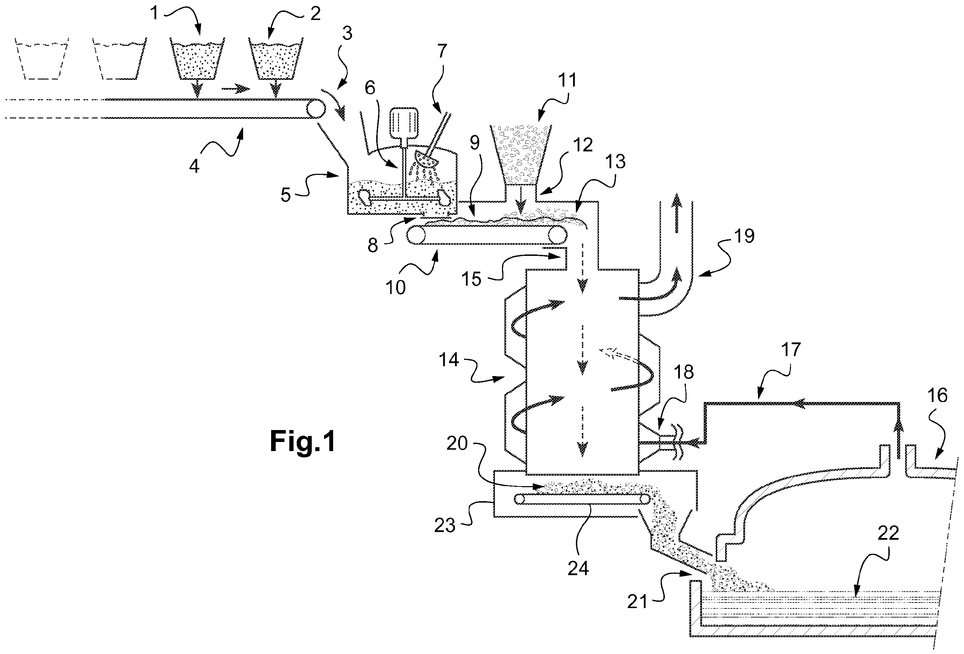

La figure 1 représente schématiquement un dispositif selon l'invention. Les différents composés 1, 2, etc, entrant dans la composition de la matière première pulvérulente 3 (sable, carbonate de sodium, etc) sont déposés en couches successives les uns après les autres sur un tapis défilant 4. Cette matière première en poudre est ensuite déversée dans la cuve d'un malaxeur 5 muni d'un agitateur à pales 6 et dans lequel de l'eau liquide et de la vapeur d'eau (se condensant en eau liquide dans la cuve) sont introduits. Dans ce malaxeur, la masse humidifiée de poudre de matière première est généralement chauffée à au moins 36°C. L'opération de malaxage est réalisée en discontinu (« en batch »), c'est-à-dire avec une quantité donnée de matière, la porte de sortie 8 étant fermée et s'ouvrant périodiquement pour délivrer de la masse humidifiée de poudre de matière première 9 sur un tapis défilant 10. Du calcin 11 est ensuite déposé en un point fixe 12 sur cette masse humidifiée en défilement pour constituer le mélange MP/C 13. Ce mélange MP/C alimente l'entrée 15 d'un préchauffeur de matières premières 14. Dans ce préchauffeur, le mélange MP/C descend verticalement dans des compartiments parallélépipédiques en acier. Des gaz de combustion 17 chauds dont la température est d'environ 800 °C) provenant du four verrier 16 sont amenés par une canalisation et introduits en 18 dans une partie basse du préchauffeur. Ces gaz circulent en serpentant dans le préchauffeur autour des compartiments parallélépipédiques pour chauffer le mélange MP/C qu'ils contiennent. Globalement, ces gaz circulent à contre-courant du mélange MP/C. Ces gaz sortent ensuite en 19 dans une partie haute du préchauffeur. Le chauffage du mélange MP/C produit de la vapeur d'eau. Il s'agit d'eau libre du mélange MP/C et le cas échéant d'eau provenant de la déshydratation d'un hydrate tel qu'un carbonate de sodium hydraté contenu dans le mélange MP/C. Cette vapeur d'eau peut être éliminée au cours de la descente du mélange MP/C grâce à des orifices dans les compartiments parallélépipédiques, auquel cas cette vapeur d'eau se mélange avec les gaz de combustion circulant autour des compartiments parallélépipédiques. Le mélange MP/C sec et chaud sort en bas du préchauffeur et constitue alors la masse à enfourner 20. Celle-ci est ensuite enfournée en 21 dans le four 16 contenant un bain de verre 22. Un tapis défilant 24 convoie cette masse à enfourner 20 vers une niche 21 d'introduction de matières premières vitrifiables. La descente du mélange MP/C est continue dans le préchauffeur 14, et l'alimentation du four en masse à enfourner est également continue. L'alimentation en 15 du préchauffeur en mélange MP/C peut être périodique (semi-continue) en fonction de la descente de la matière dans le préchauffeur. En fonction de l'espace libre dans le préchauffeur, un système de régulation déclenche l'ouverture de la sortie 8 de la cuve 5, la réalisation de mélange MP/C sur le tapis 10 et l'introduction de mélange MP/C dans le préchauffeur. Une protection 23 entoure le mélange MP/C entre le préchauffeur et le four afin de limiter sa perte de chaleur.

## Revendications

1. Dispositif de préparation et d'enfournement de matières premières pour un four verrier comprenant
∘ un moyen de réalisation d'un mélange de poudre de matière première et d'eau liquide produisant une masse humidifiée de poudre de matière première, ledit moyen comprenant une cuve munie d'un moyen d'agitation, d'une entrée pour la poudre de matière première, d'une alimentation en eau liquide et/ou de vapeur d'eau, d'une sortie pour la masse humidifiée de poudre de matière première,
∘ un système de réalisation d'un mélange de calcin avec la masse humidifiée de poudre de matière première sortie de la cuve pour produire un mélange de matière première et de calcin, dit mélange MP/C,
∘ un préchauffeur de matière première dans lequel le mélange MP/C circule et est chauffé et séché pour produire une masse à enfourner, puis
∘ un système d'enfournement dans le four verrier de la masse à enfourner.

2. Dispositif selon la revendication précédente, **caractérisé en ce que** le système de réalisation du mélange MP/C comprend un tapis défilant sur lequel la masse humidifiée de poudre de matière première et le calcin sont déposés séparément.

3. Dispositif selon l'une des revendications précédentes, **caractérisé en ce que** le mélange MP/C s'écoule au moins partiellement verticalement, voire exclusivement verticalement, dans le préchauffeur.

4. Dispositif selon l'une des revendications précédentes, **caractérisé en ce qu'**il comprend une canalisation amenant des fumées de combustion générées par le four verrier jusqu'au préchauffeur de façon à fournir à celui-ci de l'énergie thermique de chauffage et de séchage du mélange MP/C.

5. Dispositif selon l'une des revendications précédentes, **caractérisé en ce que** les fumées de combustion et le mélange MP/C circulent dans des canalisations séparées dans le préchauffeur.

6. Dispositif selon l'une des revendications précédentes, **caractérisé en ce qu'**il est configuré pour que le mélange MP/C circule en continu dans le préchauffeur et pour que la masse à enfourner soit enfournée en continu dans le four.

7. Dispositif selon l'une des revendications précédentes, **caractérisé en ce qu'**il est configuré pour que le moyen de réalisation du mélange de poudre de matière première fonctionne en discontinu.

8. Dispositif selon la revendication précédente, **caractérisé en ce qu'**un système de régulation est apte à détecter de l'espace libre dans le préchauffeur et, en fonction de l'espace libre détecté, de commander la réalisation d'un mélange de poudre de matière première, la réalisation de mélange MP/C et l'introduction de mélange MP/C dans le préchauffeur.

9. Four verrier équipé du dispositif de l'une des revendications précédentes.

10. Procédé de fusion de verre dans un four, notamment un four de la revendication précédente, comprenant
∘ la réalisation dans une cuve d'un mélange de poudre de matière première et d'eau liquide produisant une masse humidifiée de poudre de matière première, ladite cuve étant munie d'un moyen d'agitation, d'une entrée pour la poudre de matière première, d'une alimentation en eau liquide et/ou de vapeur d'eau, d'une sortie pour la masse humidifiée de poudre de matière première, puis
∘ le mélange de calcin avec la masse humidifiée de poudre de matière première sortie de la cuve, pour produire un mélange de matière première et de calcin, dit mélange MP/C, puis
∘ le chauffage et séchage dudit mélange MP/C dans un préchauffeur, produisant une masse à enfourner, puis
∘ l'enfournement dans le four de ladite masse à enfourner.

11. Procédé selon la revendication précédente, caractérisé en ce pour la réalisation d'un mélange de poudre de matière première et d'eau liquide, de l'eau liquide est ajoutée à la poudre de matière première de sorte que la somme de la masse de l'eau liquide apportée par la poudre de matière première et de l'eau liquide ajoutée à la poudre de matière première représente 0,5 à 10% et généralement 1 à 3,5% de la masse humidifiée de poudre de matière première.

12. Procédé selon l'une des revendications précédentes de procédé, **caractérisé en ce que** le mélange MP/C comprend 0,2 à 9%, notamment 0,4 à 3,4% en masse d'eau totale, somme de l'eau complexée et de l'eau liquide.

13. Procédé selon l'une des revendications précédentes de procédé, **caractérisé en ce qu'**à l'entrée du préchauffeur, le mélange MP/C comprend 0 à 9% en masse d'eau liquide, généralement 0,1 à 9% en masse d'eau liquide, plus généralement 0,2 à 6% en masse d'eau liquide.

14. Procédé selon l'une des revendications précédentes de procédé, **caractérisé en ce que** le mélange de poudre de matière première et d'eau liquide produisant une masse humidifiée de poudre de matière première est réalisé dans une cuve munie d'un moyen d'agitation, la masse humidifiée de poudre de matière première y étant portée à au moins 36°C.

15. Procédé selon l'une des revendications précédentes de procédé, **caractérisé en ce que** le mélange MP/C entre dans le préchauffeur en ayant une température comprise entre 36 et 90°C.

16. Procédé selon l'une des revendications précédentes de procédé, **caractérisé en ce que** du calcin est mélangé à la masse humidifiée de poudre de matière première pour produire le mélange MP/C contenant 1 à 60%, généralement 5 à 60% et plus généralement 10 à 60% en masse de calcin.

17. Procédé selon l'une des revendications précédentes de procédé, **caractérisé en ce que** la poudre de matière première comprend de la silice et un fondant de la silice.

18. Procédé selon l'une des revendications précédentes de procédé, **caractérisé en ce que** la poudre de matière première comprend un composé apte à se dissoudre au moins partiellement dans l'eau liquide de la masse humidifiée de poudre de matière première puis à précipiter sous forme d'hydrate, ledit composé pouvant notamment être le carbonate de sodium ou le carbonate de potassium ou le sulfate de sodium ou le sulfate de calcium.

19. Procédé selon l'une des revendications précédentes de procédé, **caractérisé en ce que** la granulométrie de la poudre de matière première a un D50 compris entre 50 et 500 µm.

20. Procédé selon l'une des revendications précédentes de procédé, **caractérisé en ce que** au moins 90% de la masse de calcin est constituée de particules de taille comprise entre 1 mm et 10 cm, et généralement comprise entre 2 mm et 10 cm, et plus généralement de taille comprise entre 1 cm et 10 cm.

21. Procédé selon l'une des revendications précédentes de procédé, **caractérisé en ce que** le mélange MP/C est chauffé à une température comprise entre 100 et 500°C et de préférence entre 250 et 400°C dans le préchauffeur.

22. Procédé selon l'une des revendications précédentes de procédé, **caractérisé en ce que** la masse à enfourner comprend moins de 0,1% en masse d'eau totale, somme de la masse d'eau liquide et d'eau sous forme complexée.

23. Procédé selon l'une des revendications précédentes de procédé, **caractérisé en ce que** le mélange MP/C circule en continu dans le préchauffeur et **en ce que** la masse à enfourner est enfournée en continu dans le four.

24. Procédé selon l'une des revendications précédentes de procédé, **caractérisé en ce que** la réalisation d'un mélange de poudre de matière première et d'eau liquide produisant la masse humidifiée de poudre de matière première est discontinue.

## Patentansprüche

1. Vorrichtung zur Herstellung von und Beschickung mit Ausgangsstoffen für einen Glasschmelzofen, umfassend
∘ ein Mittel zum Anfertigen eines Gemenges aus Ausgangsstoffpulver und flüssigem Wasser derart, dass eine befeuchtete Masse von Ausgangsstoffpulver erzeugt wird, wobei das Mittel einen Behälter umfasst, der mit einem Rührmittel, einem Einlass für das Ausgangsstoffpulver, einer Zuleitung von flüssigem Wasser und/oder Wasserdampf und einem Auslass für die befeuchtete Masse von Ausgangsstoffpulver ausgestattet ist,
∘ ein System zum Anfertigen eines Gemenges aus Glasbruch und der befeuchteten Masse von aus dem Behälter austretendem Ausgangsstoffpulver, um ein Gemenge aus Ausgangsstoff und Glasbruch, das als MP/C-Gemenge bezeichnet wird, zu erzeugen,
∘ einen Ausgangsstoffvorwärmer, in dem das MP/C-Gemenge derart zirkuliert und erhitzt und getrocknet wird, dass eine Ofenbeschickungsmasse erzeugt wird, und darüber hinaus
∘ ein System zum Beschicken des Glasschmelzofens mit der Ofenbeschickungsmasse.

2. Vorrichtung nach dem vorhergehenden Anspruch, **dadurch gekennzeichnet, dass** das System zum Anfertigen des MP/C-Gemenges ein Laufband umfasst, auf dem die befeuchtete Masse von Ausgangsstoffpulver und der Glasbruch getrennt abgelegt werden.

3. Vorrichtung nach einem der vorhergehenden Ansprüche, **dadurch gekennzeichnet, dass** das MP/C-Gemenge in dem Vorwärmer zumindest teilweise vertikal oder sogar ausschließlich vertikal fließt.

4. Vorrichtung nach einem der vorhergehenden Ansprüche, **dadurch gekennzeichnet, dass** sie ein Leitungssystem umfasst, das vom Glasschmelzofen erzeugte Verbrennungsabgase zum Vorwärmer führt, sodass diesem thermische Energie zum Erhitzen und Trocknen des MP/C-Gemenges bereitgestellt wird.

5. Vorrichtung nach einem der vorhergehenden Ansprüche, **dadurch gekennzeichnet, dass** die Verbrennungsabgase und das MP/C-Gemenge in dem Vorwärmer in getrennten Leitungssystemen zirkulieren.

6. Vorrichtung nach einem der vorhergehenden Ansprüche, **dadurch gekennzeichnet, dass** sie derart konfiguriert ist, dass das MP/C-Gemenge kontinuierlich in dem Vorwärmer zirkuliert und dass der Ofen kontinuierlich mit der Ofenbeschickungsmasse beschickt wird.

7. Vorrichtung nach einem der vorhergehenden Ansprüche, **dadurch gekennzeichnet, dass** sie derart konfiguriert ist, dass das Mittel zum Anfertigen des Gemenges aus Ausgangsstoffpulver diskontinuierlich arbeitet.

8. Vorrichtung nach dem vorhergehenden Anspruch, **dadurch gekennzeichnet, dass** ein Regelungssystem dazu ausgelegt ist, freien Raum in dem Vorwärmer zu erkennen und in Abhängigkeit von dem erkannten freien Raum das Anfertigen eines Gemenges aus Ausgangsstoffpulver, das Anfertigen von MP/C-Gemenge und das Zuführen von MP/C-Gemenge in den Vorwärmer zu regeln.

9. Glasschmelzofen, der mit der Vorrichtung nach einem der vorhergehenden Ansprüche ausgestattet ist.

10. Verfahren zum Schmelzen von Glas in einem Ofen, insbesondere einem Ofen nach dem vorhergehenden Anspruch, umfassend
∘ Anfertigen eines Gemenges aus Ausgangsstoffpulver und flüssigem Wasser in einem derart, dass eine befeuchtete Masse von Ausgangsstoffpulver erzeugt wird, wobei der Behälter mit einem Rührmittel, einem Einlass für das Ausgangsstoffpulver, einer Zuleitung von flüssigem Wasser und/oder Wasserdampf und einem Auslass für die befeuchtete Masse von Ausgangsstoffpulver ausgestattet ist, sodann
∘ Vermengen des Glasbruchs mit der befeuchteten Masse von aus dem Behälter austretendem Ausgangsstoffpulver, um ein Gemenge aus Ausgangsstoff und Glasbruch, das als MP/C-Gemenge bezeichnet wird, zu erzeugen, sodann
∘ Erhitzen und Trocknen des MP/C-Gemenges in einem Vorwärmer derart, dass eine Ofenbeschickungsmasse erzeugt wird, sodann
∘ Beschicken des Ofens mit Ofenbeschickungsmasse.

11. Verfahren nach dem vorhergehenden Anspruch, **dadurch gekennzeichnet, dass** zum Anfertigen eines Gemenges aus Ausgangsstoffpulver und flüssigem Wasser dem Ausgangsstoffpulver flüssiges Wasser derart zugesetzt wird, dass die Summe der Masse von durch das Ausgangsstoffpulver beigebrachten flüssigen Wasser und dem Ausgangsstoffpulver zugesetzten flüssigen Wasser 0,5 bis 10 % und im Allgemeinen 1 bis 3,5 % der befeuchteten Masse von Ausgangsstoffpulver ausmacht.

12. Verfahren nach einem der vorhergehenden Verfahrensansprüche, **dadurch gekennzeichnet, dass** das MP/C-Gemenge insgesamt 0,2 bis 9 Massen-%, insbesondere 0,4 bis 3,4 Massen-%, Wasser, die Summe aus komplexiertem Wasser und flüssigem Wasser, umfasst.

13. Verfahren nach einem der vorhergehenden Verfahrensansprüche, **dadurch gekennzeichnet, dass** das MP/C-Gemenge am Einlass des Vorwärmers 0 bis 9 Massen-% flüssiges Wasser, im Allgemeinen 0,1 bis 9 Massen-% flüssiges Wasser, noch allgemeiner 0,2 bis 6 Massen-% flüssiges Wasser umfasst.

14. Verfahren nach einem der vorhergehenden Verfahrensansprüche, **dadurch gekennzeichnet, dass** das Gemenge aus Ausgangsstoffpulver und flüssigem Wasser, durch das eine befeuchtete Masse von Ausgangsstoffpulver erzeugt wird, in einem mit einem Rührmittel ausgestatteten Behälter angefertigt wird, wobei die befeuchtete Masse von Ausgangsstoffpulver dort auf mindestens 36 °C erwärmt wird.

15. Verfahren nach einem der vorhergehenden Verfahrensansprüche, **dadurch gekennzeichnet, dass** das MP/C-Gemenge mit einer Temperatur zwischen 36 und 90 °C in den Vorwärmer eintritt.

16. Verfahren nach einem der vorhergehenden Verfahrensansprüche, **dadurch gekennzeichnet, dass** der Glasbruch mit der befeuchteten Masse von Ausgangsstoffpulver vermengt wird, um das MP/C-Gemenge zu erzeugen, das 1 bis 60 Massen-%, im Allgemeinen 5 bis 60 Massen-% und noch allgemeiner 10 bis 60 Massen-% an Glasbruch enthält.

17. Verfahren nach einem der vorhergehenden Verfahrensansprüche, **dadurch gekennzeichnet, dass** das Ausgangsstoffpulver Siliciumdioxid und ein Schmelzebehandlungsmittel des Siliciumdioxids umfasst.

18. Verfahren nach einem der vorhergehenden Verfahrensansprüche, **dadurch gekennzeichnet, dass** das Ausgangsstoffpulver eine Verbindung umfasst, die geeignet ist, sich zumindest teilweise in dem flüssigen Wasser der befeuchteten Masse von Ausgangsstoffpulver aufzulösen und sodann als Hydrat auszufällen, wobei die Verbindung insbesondere Natriumcarbonat oder Kaliumcarbonat oder Natriumsulfat oder Calciumsulfat sein kann.

19. Verfahren nach einem der vorhergehenden Verfahrensansprüche, **dadurch gekennzeichnet, dass** die Teilchengröße des Ausgangsstoffpulvers einen D50 zwischen 50 und 500 µm aufweist.

20. Verfahren nach einem der vorhergehenden Verfahrensansprüche, **dadurch gekennzeichnet, dass** mindestens 90 % der Glasbruchmasse aus Teilchen mit einer Größe zwischen 1 mm und 10 cm und im Allgemeinen zwischen 2 mm und 10 cm und noch allgemeiner mit einer Größe zwischen 1 cm und 10 cm besteht.

21. Verfahren nach einem der vorhergehenden Verfahrensansprüche, **dadurch gekennzeichnet, dass** das MP/C-Gemenge im Vorwärmer auf eine Temperatur zwischen 100 und 500 °C und vorzugsweise zwischen 250 und 400 °C erhitzt wird.

22. Verfahren nach einem der vorhergehenden Verfahrensansprüche, **dadurch gekennzeichnet, dass** die Ofenbeschickungsmasse insgesamt weniger als 0,1 Massen-% Wasser, die Summe der Masse von flüssigem Wasser und komplexiertem Wasser, umfasst.

23. Verfahren nach einem der vorhergehenden Verfahrensansprüche, **dadurch gekennzeichnet, dass** das MP/C-Gemenge kontinuierlich in dem Vorwärmer zirkuliert und dass der Ofen kontinuierlich mit der Ofenbeschickungsmasse beschickt wird.

24. Verfahren nach einem der vorhergehenden Verfahrensansprüche, **dadurch gekennzeichnet, dass** das Anfertigen eines Gemenges aus Ausgangsstoffpulver und flüssigem Wasser derart, dass die befeuchtete Masse des Ausgangsstoffpulvers erzeugt wird, diskontinuierlich ist.

## Claims

1. A device for the preparation and charging of starting materials for a glass furnace, comprising:
∘ a means for carrying out a mixing of starting material powder and of liquid water, producing a moistened mass of starting material powder, said means comprising a tank provided with a stirring means, with an inlet for the starting material powder, with a feed of liquid water and/or of steam and with an outlet for the moistened mass of starting material powder,
∘ a system for carrying out a mixing of cullet with the moistened mass of starting material powder which has exited from the tank, in order to produce a mixture of starting material and of cullet, known as SM/C mixture,
∘ a starting material preheater in which the SM/C mixture circulates and is heated and dried in order to produce a mass to be charged, then
∘ a system for charging the glass furnace with the mass to be charged.

2. The device as claimed in the preceding claim, **characterized in that** the system for producing the SM/C mixture comprises a forwardly progressing belt on which the moistened mass of starting material powder and the cullet are deposited separately.

3. The device as claimed in either of the preceding claims, **characterized in that** the SM/C mixture flows at least partially vertically, indeed even exclusively vertically, in the preheater.

4. The device as claimed in one of the preceding claims, **characterized in that** it comprises a pipe conveying combustion flue gases generated by the glass furnace to the preheater, so as to provide the latter with the thermal energy for heating and drying the SM/C mixture.

5. The device as claimed in one of the preceding claims, **characterized in that** the combustion flue gases and the SM/C mixture circulate in separate pipes in the preheater.

6. The device as claimed in one of the preceding claims, **characterized in that** it is configured in order for the SM/C mixture to circulate continuously in the preheater and in order for the mass to be charged to be charged continuously to the furnace.

7. The device as claimed in one of the preceding claims, **characterized in that** it is configured in order for the means for carrying out the mixing of starting material powder to operate noncontinuously.

8. The device as claimed in the preceding claim, **characterized in that** a regulating system is capable of detecting free space in the preheater and, according to the free space detected, of controlling the preparation of a mixture of starting material powder, the preparation of SM/C mixture and the introduction of SM/C mixture into the preheater.

9. A glass furnace equipped with the device of one of the preceding claims.

10. A process for the melting of glass in a furnace, in particular a furnace of the preceding claim, comprising:
∘ the carrying out, in a tank, of a mixing of starting material powder and of liquid water, producing a moistened mass of starting material powder, said tank being provided with a stirring means, with an inlet for the starting material powder, with a feed of liquid water and/or of steam and with an outlet for the moistened mass of starting material powder, then
∘ the mixing of cullet with the moistened mass of starting material powder which has exited from the tank, in order to produce a mixture of starting material and of cullet, known as SM/C mixture, then
∘ the heating and drying of said SM/C mixture in a preheater, producing a mass to be charged, then
∘ the charging to the furnace of said mass to be charged.

11. The process as claimed in the preceding claim, **characterized in that**, in order to produce a mixture of starting material powder and of liquid water, liquid water is added to the starting material powder so that the sum of the mass of the liquid water contributed by the starting material powder and of the liquid water added to the starting material powder represents from 0.5% to 10% and generally from 1% to 3.5% of the moistened mass of starting material powder.

12. The process as claimed in either of the preceding process claims, **characterized in that** the SM/C mixture comprises from 0.2% to 9%, in particular from 0.4% to 3.4%, by total mass of water, sum of the complexed water and of the liquid water.

13. The process as claimed in one of the preceding process claims, **characterized in that**, at the inlet of the preheater, the SM/C mixture comprises from 0% to 9% by mass of liquid water, generally from 0.1% to 9% by mass of liquid water, more generally from 0.2% to 6% by mass of liquid water.

14. The process as claimed in one of the preceding process claims, **characterized in that** the mixing of starting material powder and of liquid water producing a moistened mass of starting material powder is carried out in a tank equipped with a stirring means, the moistened mass of starting material powder being brought therein to at least 36°C.

15. The process as claimed in one of the preceding process claims, **characterized in that** the SM/C mixture enters the preheater while having a temperature of between 36°C and 90°C.

16. The process as claimed in one of the preceding process claims, **characterized in that** cullet is mixed with the moistened mass of starting material powder in order to produce the SM/C mixture containing from 1% to 60%, generally from 5% to 60% and more generally from 10% to 60% by mass of cullet.

17. The process as claimed in one of the preceding process claims, **characterized in that** the starting material powder comprises silica and a flux for silica.

18. The process as claimed in one of the preceding process claims, **characterized in that** the starting material powder comprises a compound capable of dissolving at least partially in the liquid water of the moistened mass of starting material powder and of then precipitating in the hydrate form, it being possible for said compound in particular to be sodium carbonate or potassium carbonate or sodium sulfate or calcium sulfate.

19. The process as claimed in one of the preceding process claims, **characterized in that** the particle size of the starting material powder has a D50 of between 50 and 500 µm.

20. The process as claimed in one of the preceding process claims, **characterized in that** at least 90% of the mass of cullet consists of particles with a size of between 1 mm and 10 cm and generally of between 2 mm and 10 cm and more generally with a size of between 1 cm and 10 cm.

21. The process as claimed in one of the preceding process claims, **characterized in that** the SM/C mixture is heated to a temperature of between 100°C and 500°C and preferably between 250°C and 400°C in the preheater.

22. The process as claimed in one of the preceding process claims, **characterized in that** the mass to be charged comprises less than 0.1% by total mass of water, sum of the mass of liquid water and of water in complexed form.

23. The process as claimed in one of the preceding process claims, **characterized in that** the SM/C mixture circulates continuously in the preheater and **in that** the mass to be charged is charged continuously to the furnace.

24. The process as claimed in one of the preceding process claims, **characterized in that** a mixing of starting material powder and of liquid water which produces the moistened mass of starting material powder is carried out noncontinuously.
